# EUROPEAN PATENT SPECIFICATION

(11) **EP 1 136 711 B1**
(45) Date of publication and mention of the grant of the patent: **12.10.2005**
(21) Application number: 00830227.5
(22) Date of filing: 24.03.2000
(51) Int. Cl.: F16C 33/26, B23Q 3/00

(54) **A bearing with adjustable contact element for supporting spindles during machining**
Lager mit einstellbarem Kontaktelement zur Abstützung von Spindeln während der Bearbeitung
Palier avec élément de contact ajustable pour supporter une broche pendant usinage

(43) Date of publication of application: 26.09.2001
(73) Proprietor: Cate S.R.L., 10141 Torino (IT)
(72) Inventor: Rebuffo, Andrea, 18016 S.Bartolomeo al Mare (IM) (IT); Giacomone, Cesare, 10020 Revigliasco (TO) (IT)
(74) Representative: Robba, Pierpaolo

(56) References cited:
- EP-A- 0 811 463
- US-A- 4 706 372
- US-A- 4 771 157
- PATENT ABSTRACTS OF JAPAN vol. 1995, no. 11, 26 December 1995 (1995-12-26) & JP 07 227723 A (NIPPON STEEL CORP), 29 August 1995 (1995-08-29)

## Description

The invention concerns a bearing with adjustable contact element for supporting spindles during machining.

More particularly, the invention relates to a bearing for supporting, during surface machining, rotatable spindles of different kinds, such as for instance the spindles of the rotors of electrical motors submitted to different operations, such as collector turning.

It is known from US 4,771,157 that, during preparation machining of the copper surface of the rotor armature of an electric motor, the spindles of said armature are put onto two pairs of V-shaped bearings, of which each arm is equipped, in correspondence with the point of contact with the spindle, with an insert of wear-resistant hard material, arranged so as to ensure a point of contact with the spindle surface.

It is also known that a necessary condition for a good armature preparation is that the spindle axis is arranged in a spatially precise position, to guarantee the position imposed by said bearings.

Said position adjustment is not very easy and, if it is not properly effected, may lead to a defective machining on the rotor armature because of the positioning error.

The aim of the present invention is to obviate those drawbacks of a laborious and delicate set up, by providing a pair of bearings that, thanks to their design, lead to a fast set up of the rotor axis relative to the bearings, without particular difficulties.

The above and other aims are attained by the bearings designed as claimed in the appended claims.

The invention will now be disclosed with reference to the accompanying drawings, which relate to a preferred but non limiting embodiment of the invention, and in which:
- Fig. 1 is a schematic view of an armature of an electric motor to be put onto the bearings;
- Fig. 2 is a front schematic view of the bearings, joined together to support the spindle of the armature of the motor shown in Fig. 1;
- Fig. 3 is a schematic view of the arrangement of the inserts into the bearings shown in Fig. 2, according to the prior art;
- Fig. 4 is a schematic view of the arrangement of the inserts into the bearings shown in Fig. 2, according to the present invention;
- Fig. 5 is a perspective view of a slide comprising a metal cylinder and an insert with cylindrical external surface;
- Fig. 6 is a perspective view of the insert.

As clearly shown in the drawings, an armature 1 of an electric motor has two spindle portions 3 axially projecting from the body of said armature 1. Those portions 3 must be put onto a bearing 5 (of course, a bearing for each portion is to be provided) in order to effect the requested machining for preparing copper surface 7 onto which the electric motor brushes are to slide.

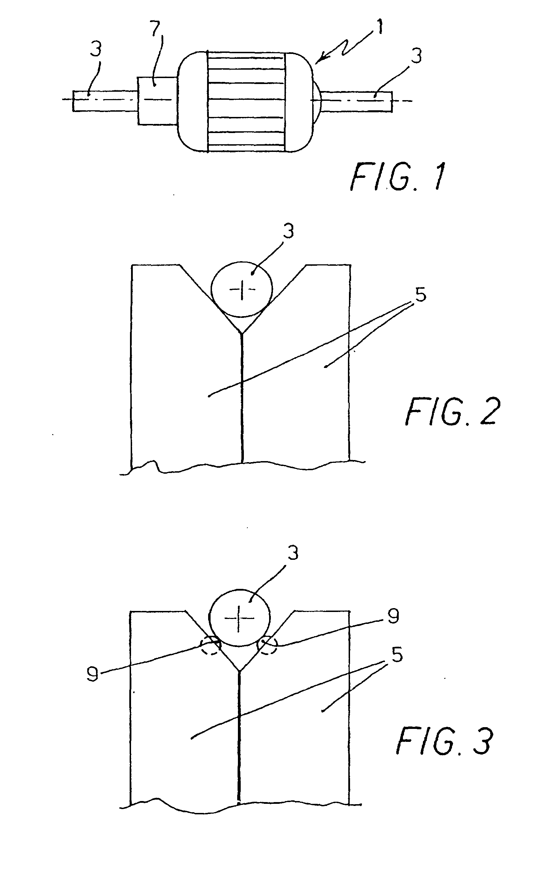

According to the prior art (Fig. 3) each said bearing 5 is equipped, in the area of contact with the spindle, with an insert 9, generally of sintered hard metal or natural diamond, that projects from the surface of bearing 5 and directly contacts the outer surface of said spindle according to a cylinder generatrix.

As said before, the bearings of sintered hard metal or diamond have to guarantee a position of the spindle axis that is precisely defined in the space: this is not always easy to be obtained and yet is of paramount importance in order the copper armature surface in contact with the brushes can be operated upon according to a straight line exactly parallel with the rotor axis.

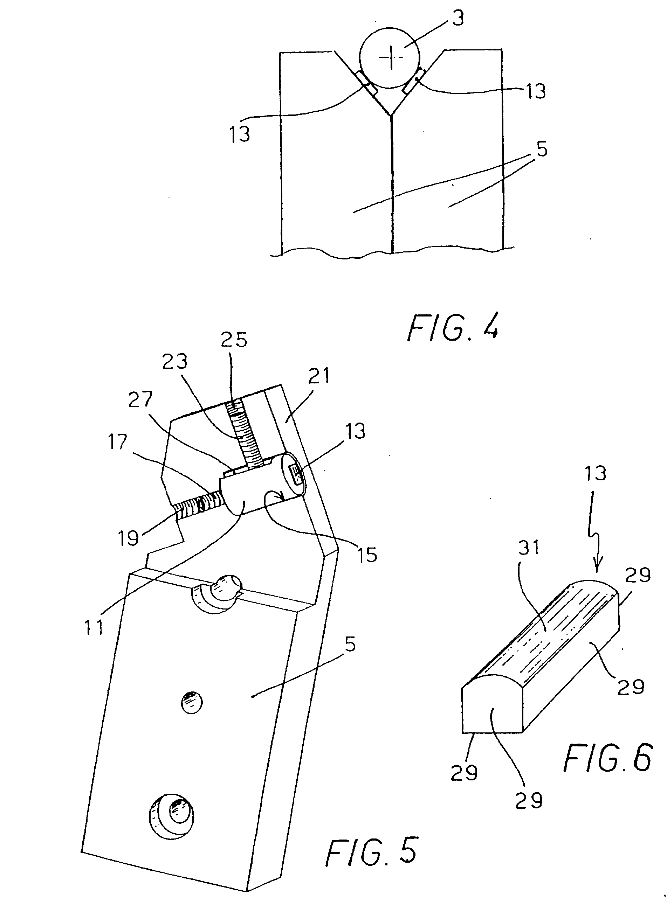

According to the invention (Fig. 4 and fol.) each said bearing 5 is equipped, in the area in contact with spindle 3, with a cylindrical slide 11, of sintered metal, of which the axis is perpendicular to the axis of spindle 3. On said slide, normally to the generatrix of said spindle 3, there is inserted an insert 13 with a cylindrical outer surface 31, made of monocrystalline synthetic diamond or other suitable wear-resistant material, such as for instance polycrystalline diamond, CVD diamond, ruby, natural diamond and so on. Thus the insert contacts generatrix of spindle 3 at only one point of the generatrix of its cylindrical outer surface.

More particularly (Fig. 5), cylindrical slide 11 is housed in a suitable cavity 15 of bearing 5 and is equipped with an advance screw, located at 19, which can adjust the position of said slide 11 relative to the outer surface 21 of bearing 5. Slide 11 can be axially blocked in the desired position thanks to another fastening means such as a screw or a dowel 23, located at 25 and radially acting upon cylindrical slide 11, in a suitable groove 27.

As it is apparent from Fig. 5, insert 13 of monocrystalline diamond or other wear-resistant hard material, located in said metal slide 11, projects from the outer surface 21 of bearing 5 by the desired amount, which can be adjusted through the aforementioned means 17, 23 for adjusting slide 11.

Insert 13 of monocrystalline synthetic diamond consists of a prismatic block, of which the side and bottom faces 29 are plane whereas the active outer surface 31 is cylindrical: this makes fastening of said block 13 onto said slide 11 easier.

## Claims

1. A bearing with adjustable contact element for supporting spindles (3) during machining, comprising two support members (5) coupled so as to form a V-shaped bearing onto which the end portions of the spindle (3) to be machined rest, whereby each said support member (5) is equipped, in the area contacting the spindle (3), with an insert (13) of wear-resistant material, having a substantially cylindrical outer surface (31) and arranged with the generatrices perpendicular to the axis of said spindle, whereby the insert contacts the cylindrical outer surface of said spindle (3) at only one point.

2. A bearing according to claim 1, wherein said insert (13) is inserted into one of the bases of a cylindrical metal slide (11) housed in a suitable cavity (15) of the bearing (5), the position of said slide (11) in the cavity (15) being adjustable through an advance screw (17) and said slide (11) being securable in the desired position through a screw or dowel (23), radially acting upon the slide (11) within a proper groove (27).

3. A bearing according to claim 2, wherein said insert (13) projects from the outer surface (21) of the bearing (5) by the desired amount, which can be adjusted through the aforementioned means (17, 23) for adjusting said slide (11).

4. A bearing according to the preceding claims, wherein said insert (13), located in said metal slide (11), consists of a prismatic block, of which the side and bottom faces (29) are plane and the outer surface (31) is cylindrical.

5. A bearing according to any preceding claim, wherein said insert (13) of wear-resistant material is made of monocrystalline synthetic diamond or polycrystalline synthetic diamond, or CVD diamond, or ruby, or natural diamond.

## Patentansprüche

1. Lager mit einstellbarem Kontaktelement zur Abstützung von Spindeln (3) während der Bearbeitung, das zwei Stützelemente (5) aufweist, die so zusammengefügt sind, dass sie ein V-förmiges Lager bilden, auf dem die Endpartien der zu bearbeitenden Spindel (3) aufliegen, wobei jedes der Stützelemente (5) in dem die Spindel (3) berührenden Bereich mit einem Einsatz (13) aus verschleißfestem Werkstoff ausgerüstet ist, der eine im wesentlichen zylindrische Außenfläche (31) besitzt, deren Erzeugende senkrecht zur Achse jener Spindel angeordnet ist, wobei der Einsatz die zylindrische Außenfläche jener Spindel (3) nur in einem Punkt berührt.

2. Lager nach Anspruch 1,
wobei jenes Einsatzelement (13) in eine der Grundflächen eines zylindrischen metallischen Schlittens (11) eingelassen ist, der in einer geeigneten Aussparung (15) des Lagers (5) untergebracht ist und die Lage jenes Schlittens (11) in der Aussparung (15) durch eine Zustellschraube (17) einstellbar ist und jener Schlitten (11) in der gewünschten Position durch eine Schraube oder einen Stift (23) gesichert werden kann, die in einer eigenen Nut (27) radial auf den Schlitten (11) wirkt.

3. Lager nach Anspruch 2,
wobei jener Einsatz (13) von der Außenfläche (21) des Lagers (5) um einen gewünschten Betrag hervorsteht, der durch die oben erwähnten Mittel (17, 23) zur Einstellung des Schlittens (11) abgestimmt werden kann.

4. Lager nach den vorhergehenden Ansprüchen,
wobei jener in dem metallischen Schlitten (11) angeordnete Einsatz (13) aus einem prismatischen Block besteht, dessen Seiten und Grundflächen (29) eben und dessen Oberfläche (31) zylindrisch ist.

5. Lager nach einem der vorhergehenden Ansprüche,
wobei jener Einsatz (13) aus verschleißfestem Werkstoff aus monokristallinem synthetischem Diamant oder polykristallinem synthetischem Diamant oder CVD Diamant oder Rubin oder natürlichem Diamant hergestellt ist.

## Revendications

1. Appui doté d'un élément de contact réglable destiné à supporter des broches (3) pendant un usinage, comportant deux éléments de support (5) couplés de façon à former un appui configuré en V sur lequel les parties d'extrémité de la broche (3) à usiner reposent, de façon que chaque dit élément de support (5) est doté, dans la zone au contact de la broche (3), d'une pièce d'insertion (13) d'un matériau résistant à l'usure, présentant une surface extérieure essentiellement cylindrique (31) et disposée de sorte que les génératrices soient perpendiculaires à l'axe de ladite broche, de façon que la pièce d'insertion se trouve au contact de la surface extérieure cylindrique de ladite broche (3) en un point seulement.

2. Appui selon la revendication 1, dans lequel ladite pièce d'insertion (13) est insérée dans l'une des bases d'une glissière métallique cylindrique (11) logée dans une cavité appropriée (15) de l'élément de support (5), la position de ladite glissière (11) dans la cavité (15) pouvant être réglée par une vis d'approche (17) et ladite glissière (11) pouvant être fixée dans la position souhaitée au moyen d'une vis ou d'une cheville (23), agissant radialement sur la glissière (11) à l'intérieur d'une gorge appropriée (27).

3. Appui selon la revendication 2 dans lequel ladite pièce d'insertion (13) fait saillie à partir de la surface extérieure (21) de l'élément de support (5) d'une quantité souhaitée, laquelle peut être réglée par l'intermédiaire des moyens mentionnés ci-dessus (17, 23) pour régler ladite glissière (11).

4. Appui selon les revendications précédentes dans lequel ladite pièce d'insertion (13), placée dans ladite glissière métallique (11), est constituée d'un bloc prismatique dont les faces latérales et inférieure (29) sont planes et dont la surface extérieure (31) est cylindrique.

5. Appui selon l'une quelconque des revendications précédentes dans lequel ladite pièce d'insertion (11) en matériau résistant à l'usure est faite de diamant synthétique monocristallin ou de diamant synthétique polycristallin, ou de diamant CVD, ou de rubis, ou de diamant naturel.
